# EUROPÄISCHE PATENTSCHRIFT

(11) **EP 1 730 430 B1**
(45) Veröffentlichungstag und Bekanntmachung des Hinweises auf die Patenterteilung: **01.10.2008**
(21) Anmeldenummer: 05716246.3
(22) Anmeldetag: 19.03.2005
(51) Int. Cl.: F16K 1/44

(54) **DOPPELSITZVENTIL**
DOUBLE-SEAT VALVE
SOUPAPE A DOUBLE SIEGE

(30) Priorität: 29.03.2004 DE 102004015799
(43) Veröffentlichungstag der Anmeldung: 13.12.2006
(73) Patentinhaber: Tuchenhagen GmbH, 21514 Büchen (DE)
(72) Erfinder: SAUER, Martin, 86687 Kaisheim (DE); SCHMID, Werner, 89522 Heidenheim (DE); WIEDENMANN, Willi, 73469 Riesbürg (DE); WENGERT, Holger, 73441 Bopfingen (DE)
(74) Vertreter: Hauck Patent- und Rechtsanwälte
(86) Internationale Anmeldenummer: PCT/EP2005/002966
(87) Internationale Veröffentlichungsnummer: WO 2005/098287

(56) Entgegenhaltungen:
- EP-B- 0 819 876
- US-A- 5 732 727
- US-B1- 6 279 602

## Beschreibung

### TECHNISCHES GEBIET

Die Erfindung betrifft ein Doppelsitzventil mit zwei seriell angeordneten, relativ zueinander bewegbaren Schließgliedern mit den oberbegrifflichen Merkmalen des Anspruchs 1.

### STAND DER TECHNIK

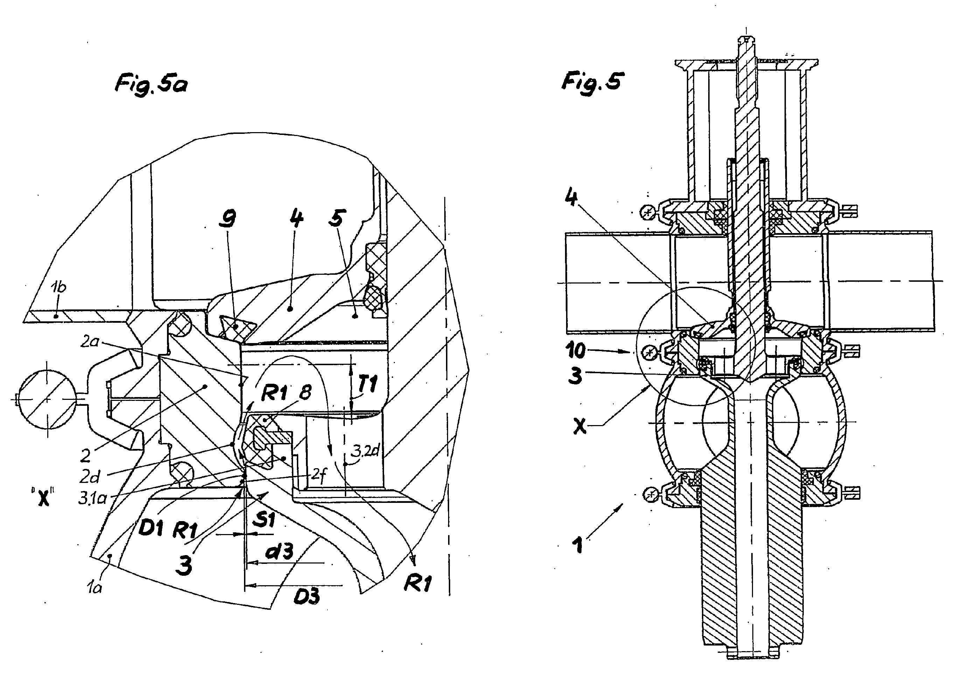

Aus der US 5 732 727 A sind ein Verfahren zum leckagefreien Schalten eines Doppelsitzventils der gattungsgemäßen Art und eine Dichtungsanordnung zur Durchführung des Verfahrens bekannt. Gemäß einer bevorzugten Dichtungsanordnung (Figuren 5 bis 8) ist die erste Sitzdichtung an ihrer dem zweiten Schließglied zugewandten oberen sitirnseitigen Begrenzungsfläche so ausgestaltet, dass letztere im Wesentlichen senkrecht zur zylindrischen Sitzfläche orientiert ist. Dadurch ist zwischen Sitzdichtung und zylindrischer Sitzfläche keine Vertiefung und somit keine Sumpfbildung gegeben.

Bei der vorstehenden Dichtungsanordnung ist weiterhin die zweite Sitzdichtung derart bemessen, dass ihre der zweiten Sitzfläche zugewandte Berandung, radial gesehen, nach innen über die zylindrische Sitzfläche hinausreicht. Dadurch ergibt sich beim Aufeinanderfahren der beiden Schließglieder, beginnend in der Abholstellung, ein elastische Kohtakt im Eckenbereich der beiden Sitzdichtungen, sodass ein bei nicht gattungsgleichen Doppelsitzventilen in diesem Bereich und in dieser Position regelmäßig vorhandener, kavernenartig eingeschlossener Raum nicht.zustande kommen kann, da sich die beiden Sitzdichtungen zunächst in diesem Bereich elastisch aneinander legen und ggf. an dieser Stelle anhaftende Flüssigkeit von außen nach innen verdrängt wird.

Aus der EP 0 819 876 B1 ist ein sog. sitzreihtgungsfähiges Doppelsitzventil bekannt, bei dem ein unabhängig angetriebenes erstes Schließglied als sog. Schieberkolben ausgebildet ist, an dem eine erste Sitzdichtung angeordnet ist. Ein abhängig angetriebenes und als sog. Sitzteller ausgebildetes zweites Schließglied besitzt eine zweite Sitzdichtung, welche auf einer kegelförmigen zweiten Sitzfläche abdichtet. Die auf dem Schieberkolben angeordnete erste Sitzdichtung weist neben einer radialen Dichtfunktion innerhalb der ersten Sitzfläche, die als zylindrische Sitzfläche ausgebildet ist, gleichzeitig eine axiale Abdichtfunktion gegenüber dem zweiten Schließglied auf. Diese axiale Abdichtfunktion wird wiederum dann wirksam, wenn das erste Schließglied im Zuge der Öffnungsbewegung in eine sog. Abholstellung mit dem zweiten Schließglied gelangt und dieses dann gleichfalls in eine Offenstellung überführt. Die erste Sitzdichtung ist in einer kreisringförmigen Nut eingebettet, die ein Stück weit von dem dem zweiten Schließglied zugewandten Endabschnitt des ersten Schließgliedes in letzterem angeordnet ist.

Die vorstehend beschriebene Doppelfunktion einer Sitzdichtung eines Doppelsitzventils, die darin besteht, dass diese zum einen in der Schließstellung des Doppelsitzventils im aufnehmenden Schließglied gegenüber einer zugeordneten Sitzfläche in der Verbindungsbohrung zwischen den beiden Ventilgehäuseteilen abdichtet und zum anderen in der Offenstellung als Mitteldichtung eine Abdichtfunktion gegenüber dem anderen Schließglied wahrnimmt, ist bereits aus den Druckschriften DE 3109 002 A1 (Anspruch 1, Figur und zugeordnete Beschreibung) und DE 32 42 947 C2 (Figur.2 und zugeordnete Beschreibung) bekannt.

Ein die Reinigungsmittelmenge bei der Sitzreinigung des zweiten Schließgliedes begrenzender Drosselspalt ist zwischen der zweiten Sitzdichtung und dem Leckagehohlraum angeordnet (EP 0 819 876 B1). Dadurch wird der ohnehin schon relativ große Abstand zwischen der ersten und der zweiten Sitzdichtung aufgrund des vorstehend erwähnten Randabstandes der Nut für die erste Sitzdichtung noch um die leckageraumseitig angeordneten Maßnahmen zur Bildung des vorg. Drosselspaltes für das zweite Schließglied vergrößert. Aus dieser Anordnung resultiert ein relativ langer und teilweise auch, in radialer Richtung gesehen, relativ breiter Spaltraum, der maßgeblich bestimmend ist für eine unerwünschte sog. Schaltleckage.

Im Moment des Abholens des zweiten Schließgliedes durch das erste Schließglied im Zuge der Öffnungsbewegung wird der vorgenannte Spaltraum durch die auch axial wirkende Sitzdichtung im ersten Schließglied kavernenartig abgeschlossen, sodass in der dort eingeschlossenen Flüssigkeit im Zuge der nachfolgenden Öffnungsbewegung bereits bei minimaler Kompression der axial verformten Dichtungsteile ein Druckaufbau in dem erwähnten Spaltraum stattfindet. Dadurch kann diese Flüssigkeit in die engen Spalte zwischen den beteiligten Sitzdichtungen und den sie umgebenden Dichtungsnuten verpresst werden, was aus hygienischen Gesichtspunkten außerordentlich unerwünscht ist, da diese Spalte nur schwer oder überhaupt nicht einer Reinigung zugänglich sind. Darüber hinaus wird die in den Spalträumen zwischen den Schließgliedern eingeschlossene Flüssigkeit bei jedem Schaltvorgang als sog. Schaltleckage frei, die über den Leckagehohlraum und den Verbindungsweg in die Umgebung des Doppelsitzventils abzuführen ist.

Eine vergleichbar kritische Situation ergibt sich im Zuge der Schließbewegung des Doppelsitzventils, wenn die zweite Sitzdichtung mit der zugeordneten zweiten Sitzfläche in Kontakt tritt und gleichzeitig die erste Sitzdichtung, die noch ihre Abdichtfunktion gegenüber dem zweiten Schließglied wahrnimmt, in den dichtenden Eingriff mit der zylindrischen Sitzfläche gelangt. Eine nachfolgende Deformation der zweiten Sitzdichtung bis.zur Anlage des zweiten Schließgliedes unmittelbar oder mittelbar am Ventilgehäuse bewirkt einen Druckaufbau in der inkompressiblen Flüssigkeit, die in der Kaverne zwischen den beiden Schließgliedern einerseits und der Verbindungsbohrung mit ihren beiden Sitzflächen andererseits eingeschlossen ist.

Das bekannte Doppelsitzventil gemäß EP 0 819 876 B1 weist einen weiteren signifikanten Nachteil auf, der sich aus der Anordnung der Sitzdichtung im ersten Schließglied einerseits und ihrer Dichtwirkung sowohl in radialer als auch in axialer Richtung andererseits ergibt. Wie dies aus den dortigen Figuren 9 (B) und Figur 9 (C) ersichtlich ist, wird, ausgehend von der Schließstellung des Doppelsitzventils, zwischen dem ersten Schließglied in Verbindung mit seiner Sitzdichtung und der zugeordneten zylindrischen Sitzfläche ein v-förmiger, in axialer Richtung relativ tiefgreifender Ringraum gebildet, aus dem sich beispielsweise Leckage oder Schaltflüssigkeit, die sich dort angesammelt hat, im Zuge der Öffnungsbewegung nicht selbsttätig in den Leckagehohlraum und von dort in die Umgebung des Doppelsitzventils entleeren kann. Diese Flüssigkeit verbleibt bis zum Kontakt des ersten mit dem zweiten Schließglied in diesem v-förmigen Ringraum, der einen sog. Sumpf bildet, und wird in diesem kavernenartig eingeschlossen.

Für diesen Einschluss ist die besonders kritische Deckelung durch das zweite Schließglied verantwortlich. Letzteres ist an seiner dem ersten Schließglied zugewandten inneren Oberfläche kegelförmig ausgebildet und steht in der Abholstellung bzw. der nachfolgenden Offenstellung mit letzterem im Eingriff. Dabei ist die kegelförmige Oberfläche derart ausgestaltet, dass sie in Richtung des ersten Schließgliedes auseinander läuft. Die erste Sitzdichtung wird durch die innere, kegelförmige Oberfläche des zweiten Schließgliedes so weit verformt, bis beide in ihrer Oberflächengestalt korrespondierenden Schließglieder im Bereich neben der Sitzdichtung aneinander:zur Anlage kommen. Eine Deformation der ersten Sitzdichtung bewirkt dann einen mehr oder weniger signifikanten Druckaufbau in der eingeschlossenen Flüssigkeit, die dann ggf. in die engen Spalte zwischen erster Sitzdichtung und erstem Schließglied einerseits und in den Drosselspalt zwischen zweitem Schließglied und benachbarten Gehäuseteil und von dort bis an die zweite Sitzdichtung und in deren Spalte mit dem zweiten Schließglied andererseits verpresst wird.

Insbesondere beim Einsatz der in Rede stehenden Doppelsitzventile im Nahrungsmittel- und Getränkebereich, der Pharmazie oder der Biotechnologie ist nahezu leckagefreies Schalten, im Idealfall absolut leckagefreies Schalten, erwünscht. Darüber hinaus muss in jedem Falle weitestgehend verhindert werden, dass beim Schalten die in den vorerwähnten Spalträumen eingeschlossene Flüssigkeit einen Druckaufbau erfährt und dadurch u.a. in die engen Spalte zwischen den Sitzdichtungen und der jeweils zugeordneten Dichtungsnut verpresst wird.

Durch die leckagehohlraumseitige Anordnung des Drosselspaltes am zweiten Schließglied (EP 0 819 876 B1) wird bei der zugeordneten Sitzreinigung die freigelegte zweite Sitzdichtung direkt aus dem zweiten Ventilgehäuseteil angeströmt. Diese direkte Anströmung ist unerwünscht, da mit dem Reinigungsmittel eine strömungsmechanische Beanspruchung der zweiten Sitzdichtung erfolgt und auch abrasive Feststoffe transportiert werden können, die einen zusätzlichen Verschleiß an der dieser zweiten Sitzdichtung befördern.

Es ist Aufgabe der vorliegenden Erfindung, bei einem Doppelsitzventil der gattungsgemäßen Art beim Schalten des Doppelsitzventils einen Druckaufbau zwischen den Sitzdichtungen zu vermeiden, indem ein zwischen den beiden Schließgliedern anhaftender Flüssigkeitsfilm radial von außen nach innen verdrängt wird. Darüber hinaus soll die jeweilige Sitzdichtung im Zuge der zugeordneten Sitzreinigung einer unmittelbaren Anströmung durch das Reinigungsmittel aus dem zugeordneten Ventilgehäuseteil entzogen werden.

### ZUSAMMENFASSUNG DER ERFINDUNG

Die Aufgabe wird durch ein Doppelsitzventil mit den Merkmalen des Anspruchs 1 gelöst. Vorteilhafte Ausgestaltungen des Doppelsitzventils gemäß der Erfindung sind Gegenstand der Unteransprüche.

Der erfinderische Grundgedanke besteht zum einen darin, dass die sich in der oberen Begrenzungsfläche des ersten Schließgliedes fortsetzende obere stimseitige Begrenzungsfläche der ersten Sitzdichtung gegenüber dem zweiten Schließglied den kürzeren axialen Abstand aufweist. Dadurch können in der Abholstellung und der sich anschließenden Offenstellung die beiden Sitzdichtungen so weit axial einander angenähert werden, dass sie zumindest im jeweiligen Eckenbereich unmittelbar aneinander stoßen.

Der erfinderische Grundgedanke besteht weiterhin darin, dass eine von der zylindrischen Sitzfläche umfasste, dem ersten Schließglied zugewandte stirnseitige Begrenzungsfläche des zweiten Schließgliedes im Bereich der radialen Erstreckung der oberen stimseitigen Begrenzungsfläche der ersten Sitzdichtung eine sehr geringe, zur Mittelachse des zweiten Schließgliedes hin gerichtete, aufsteigende Neigung besitzt. Dadurch kommt die untere Begrenzungsfläche des zweiten Schließgliedes in der Abholstellung zunächst unmittelbar an der zylindrischen Sitzfläche in einen Erstkontakt mit der ersten Sitzdichtung, sodass ein ggf. in diesem Bereich auf der ersten Sitzdichtung oder am zweiten Schließglied anhaftender Flüssigkeitsfilm, radial gesehen, von außen nach innen verdrängt wird.

Gemäß einer vorteilhaften Ausgestaltung der Erfindung ist vorgesehen, die erste Sitzdichtung in der Randausnehmung form- und kraftschlüssig einzubetten, wodurch dort dann eine besonders sichere Aufnahme gewährleistet ist.

Ein erfinderischer Gedanke besteht weiterhin darin, dass in der ersten Sitzdichtung ein Einlegeteil in Form beispielsweise eines Stützringes einvulkanisiert ist. Eine diesbezügliche Ausgestaltung sieht vor, dass der Einlegeteil, in radialer Richtung gesehen, aus der ersten Sitzdichtung innenseits in Form eines Steges heraustritt, sodass an diesem Steg die erste Sitzdichtung stützende Einspann- und Haltekräfte angreifen können.

Weiterhin ist vorgesehen, dass der Einlegeteil in einem sich axial erstreckenden Teil als hammerförmiges Kopfteil ausgebildet ist, der für eine formschlüssige Verbindung innerhalb des duktilen Dichtungsmateriales sorgt, sodass Kräfte von der ersten Sitzdichtung über diesen hammerförmigen Kopfteil sicher auf den Steg übertragen werden.

Eine weiter Ausführungsform sieht vor, dass das erste Schließglied zweistückig in Form eines hauptsächlich radial außenseitigen ersten Schließgliedteils und eines hauptsächlich radial innenseitigen zweiten Schließgliedteils ausgebildet ist, dass der Steg zwischen den Schließgliedteilen in axialer Richtung eingespannt ist, und dass das erste Schließgliedteil die Randausnehmung auf der einen Seite und das zweite Schließgliedteil die Randausnehmung auf der anderen Seite des Steges ausbilden. Durch diese Ausführung kann die erste Sitzdichtung mit dem einvulkanisierten Stützring im ersten Schließglied form- und kraftschlüssig montiert werden und der Steg kann somit genutzt werden, um zwischen dem ersten und dem zweiten Schließgliedteil, aus denen das erste Schließglied form- und kraftschlüssig gefügt ist, axial eingespannt zu werden. Darüber hinaus wird vorgeschlagen, dem Steg durch das zweite Schließgliedteil eine, radial gesehen, innenseitige Stützung zu geben.

Eine Führung und Verbindung der beiden Schließgliedteile wird dadurch erreicht, dass die beiden vorgenannten Schließgliedteile vorzugsweise über eine zylindrische Passung in Richtung der Längsachse des ersten Schließgliedes zueinander koaxial geführt und über eine sich an diese Führung anschießende Verschraubung miteinander verschraubt sind.

Die formschlüssige Einbettung der ersten Sitzdichtung in die Randausnehmung wird erreicht, wenn letztere in dem dem zweiten Schließglied abgewandten Bereich im Wesentlichen v-förmig ausgeführt ist, sodass sich, radial gesehen, die mit diesem Bereich korrespondierende erste Sitzdichtung von innen nach außen entsprechend verjüngt.

Der dem zweiten Schließglied zugewandte zweite Schließgliedteil weist einen konischen Endabschnitt auf, der die benachbarte erste Sitzdichtung derart verpresst, dass diese sich, radial gesehen, in diesem Bereich von außen nach innen entsprechend verjüngt. Durch diese Maßnahme ist neben der notwendigen formschlüssigen Berandung der ersten Sitzdichtung zusätzlich eine spaltfreie kraftschlüssige Einbettung der ersten Sitzdichtung in die Randausnehmung sichergestellt.

Durch die erfindungsgemäße Anordnung der beiden Sitzdichtungen ist es nunmehr möglich, diese möglichst nah aneinander zu positionieren, um dadurch den Druckaufbau zwischen den Sitzdichtungen und die Leckageverluste beim Schalten des.Doppelsitzventils zu minimieren.

Ein weiterer erfinderischer Gedanke besteht darin, bei einem Doppelsitzventil, bei dem die beiden Schließglieder unabhängig voneinander durch einen Teilhub jeweils spaltweit in eine Sitzreinigungsstellung zwecks Spülung ihrer Sitzflächen überführbar sind, Drosselspalte zur Begrenzung der bei der Sitzreinigung generierten Reinigungsmittelmenge jeweils auf der aus der Sitzreinigungsströmung resultierenden Anströmseite der Sitzdichtung anzuordnen. Dies hat den Vorteil, dass bei der Sitzreinigung kein Einklemmen von Partikeln zwischen Sitzdichtung und zugeordneter Sitzfläche erfolgen kann, wenn sich vorder Drosselspalt Feststoffe aus dem Reinigungsmedium ablagern. Falls diese aufgrund ihrer Größe den relativ eng zu bemessenden Drosselspalt nicht passieren können, bleiben die Sitzdichtungen dann auch frei von diesbezüglichen Ablagerungen und Beeinträchtigungen. Ein weiterer Vorteil dieser Anordnung besteht darin, dass die zweite Sitzdichtung, die nicht unmittelbar aus dem zugeordneten zweiten Ventilgehäuseteil angeströmt wird, dadurch frei bleibt von diesbezüglichen Strömungskräften, die eine zusätzliche lebensdauerverkürzende Beanspruchung oder gar im Extremfall ein Herauslösen aus der Dichtungsnut bewirken können. Die Drosselspalte werden durch jeweils einen an den Schließgliedern angeordneten zylindrischen Ansatz einerseits und einen jeweils zugeordneten Abschnitt der Verbindungsöffnung andererseits gebildet.

Da auch beim ersten Schließglied der Drosselspalt auf der dem Leckagehohlraum abgewandten Seite des Schließgliedes angeordnet und, wie dies weiterhin vorgeschlagen wird, zwischen der zylindrischen Sitzfläche des ersten Schließgliedes und der den Drosselspalt gehäuseseitig begrenzenden Fläche mit einem ersten Innendurchmesser eine erste ringförmige Ausnehmung vorgesehen ist, sind die radiale Sitzfläche und die den Drosselspalt gehäuseseitig begrenzende Fläche voneinander getrennte Flächen. Diese Trennung erlaubt es, in der zylindrischen Sitzfläche einer Berührung und einer Beschädigung durch sog. "Fressen" des Schließgliedes mit einem größeren dritten radialen Spaltmaß, als dies im Drosselspaltbereich (erstes radiales Spaltmaß) erforderlich ist, vorzubeugen, da der Spalt zwischen der zylindrischen Sitzfläche und dem ersten Schließglied nunmehr die Drosselfunktion nicht mehr determiniert. Eine Berührung oder ein "Fressen" im Drosselspalt hat keine Auswirkung auf die zylindrische Sitzfläche; diesbezügliche Oberflächenschäden beeinträchtigen damit nicht die Standzeit der Sitzdichtung. Ein weiterer Vorteil ergibt sich aus dem Vorhandensein des Einlegeteils, beispielsweise in Form eines Stützringes, innerhalb der ersten Sitzdichtung. Dieser Stützring gibt der ersten Sitzdichtung erhöhte Stabilität und dadurch kann die erste Sitzdichtung mit relativ engen Toleranzen hergestellt werden. Dies erhöht die Betriebssicherheit der Abdichtung und damit des gesamten Doppelsitzventils.

### KURZBESCHREIBUNG DER ZEICHNUNGEN

Ein Ausführungsbeispiel des vorgeschlagenen Doppelsitzventils gemäß der Erfindung ist in der Zeichnung dargestellt und wird nachfolgend nach Aufbau und Funktion beschrieben. Es zeigen
- **Figur 1**: im Schnitt das erfindungsgemäße sitzreinigungsfähige Doppelsitzventil, das sich in seiner Schließstellung befindet;
- **Figur 1a**: in vergrößerter Darstellung eine in Figur 1 mit "X" gekennzeichnete ausschnittsweise Darstellung des Doppelsitzventils im Sitzbereich;
- **Figur 2**: im Schnitt das Doppelsitzventil gemäß Figur 1, wobei sich letzteres in einer sog. Abholstellung befindet, in der das erste Schließglied im Zuge der Öffnungsbewegung am zweiten Schließglied gerade zur Anlage gekommen ist;
- **Figur 2a**: in vergrößerter Darstellung eine in Figur 2 mit "X" gekennzeichnete ausschnittsweise Darstellung des Doppelsitzventils im Sitzbereich;
- **Figur 3**: im Schnitt das Doppelsitzventil gemäß Figur 1, wobei dieses sich in seiner Offenstellung befindet;
- **Figur 3a**: in vergrößerter Darstellung eine in Figur 3 mit "X" gekennzeichnete ausschnittsweise Darstellung des Doppelsitzventils in seinem Sitzbereich;
- **Figur 4**: im Schnitt das Doppelsitzventil gemäß Figur 1, wobei sich das abhängig angetriebene, oben liegende, als Sitzteller ausgebildete zweite Schließglied in seiner Sitzreinigungsstellung befindet;
- **Figur 4a**: in vergrößerter Darstellung eine in Figur 4 mit "X" gekennzeichnete ausschnittsweise Darstellung des Doppelsitzventils in seinem Sitzbereich;
- **Figur 5**: im Schnitt das Doppelsitzventil gemäß **Figur 1****,** wobei sich das unabhängig angetriebene, unten liegende, als Schieberkolben ausgebildete erste Schließglied in seiner Sitzreinigungsstellung befindet und
- **Figur 5a**: in vergrößerter Darstellung eine in Figur 5 mit **"X"** gekennzeichnete ausschnittsweise Darstellung des Doppelsitzventils in seinem Sitzbereich.

### DETAILLIERTE BESCHREIBUNG

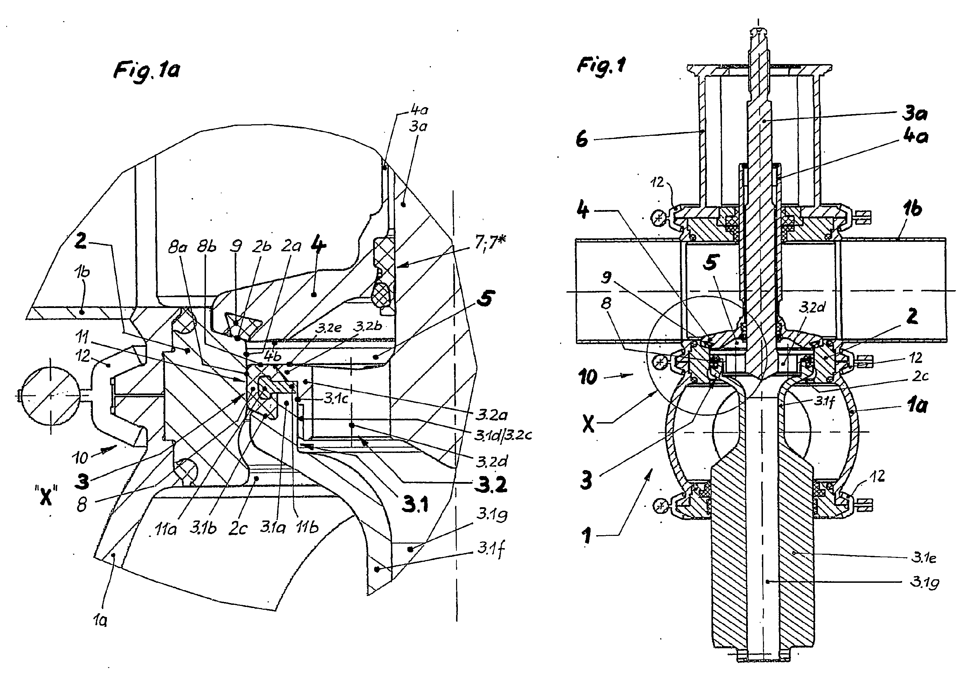

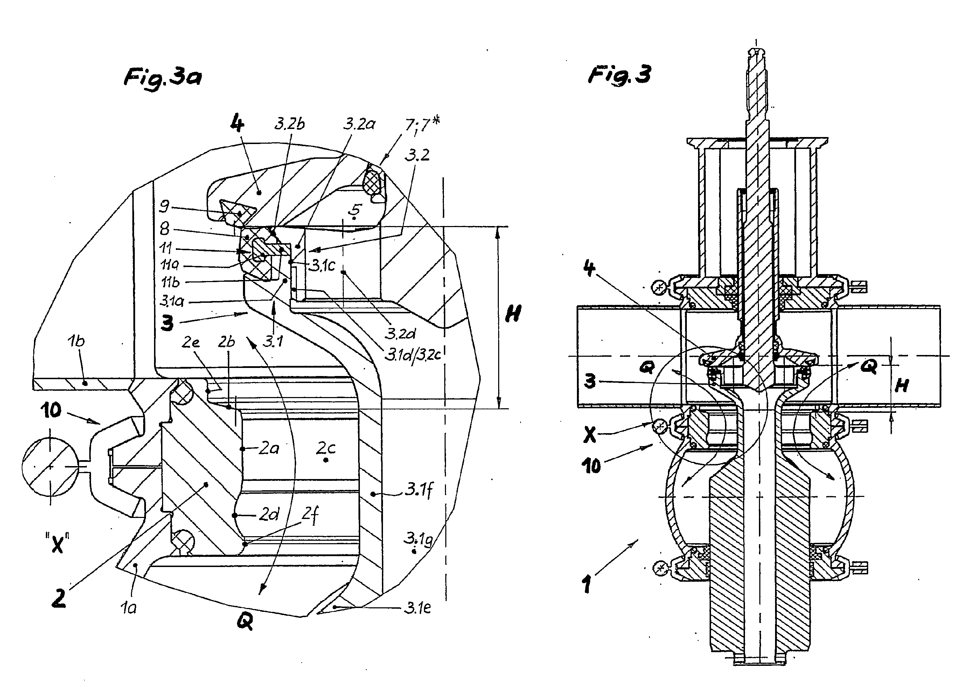

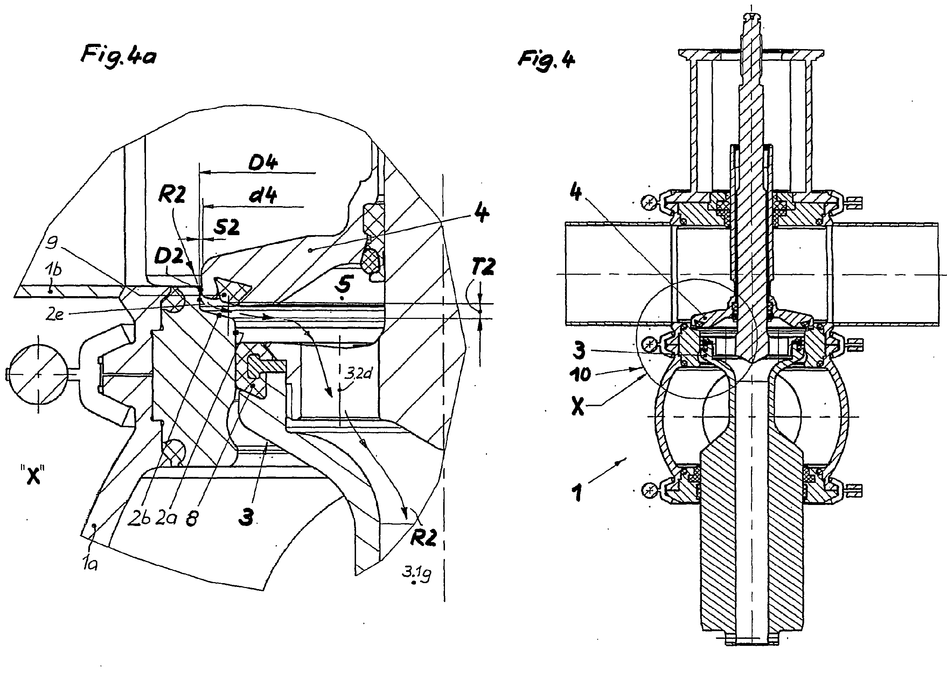

Ein erfindungsgemäßes Doppelsitzventil 1 (**Figur 1**) ist ohne eine Antriebsvorrichtung dargestellt, die über ein Laternengehäuse 6 an ein Ventilgehäuse 10 des Doppelsitzventils 1 dergestalt angeschlossen ist, dass dessen Schließglieder 3, 4 über jeweils zugeordnete Verstellstangen 3a, 4a in eine volle Offenstellung H (**Figuren 3** und **3a**) oder in Teiloffenstellungen T1, T2 (**Figuren 5** und **5a** bzw. **4** und **4a**) überführbar sind.

Das Doppelsitzventil 1 besteht im Wesentlichen aus dem Ventilgehäuse 10 mit einem ersten und einem zweiten Ventilgehäuseteil 1a bzw. 1b, den zwei unabhängig voneinander bewegbaren Schließgliedern 3 und 4 mit den jeweils zugeordneten Verstellstangen 3a bzw. 4a, einem Sitzring 2, der über eine innenseitige Verbindungsöffnung 2c eine Verbindung zwischen den Ventilgehäuseteilen 1 a, 1 b herstellt, dem das zweite Ventilgehäuseteil 1b mit der nicht dargestellten Antriebsvorrichtung verbindenden Latemengehäuse 6 sowie einer gleichfalls nicht dargestellten, in der Regel vorhandenen Steuereinrichtung, wobei letztere auf der dem Doppelsitzventil 1 abgewandten Seite der Antriebsvorrichtung angeordnet ist.

Das als Schieberkolben ausgebildete erste Schließglied 3 findet in der Schließstellung des Doppelsitzventils (**Figur 1, 1a**) in einer von der Verbindungsöffnung 2c gebildeten ersten Sitzfläche 2a, die als zylindrische Sitzfläche ausgeführt ist, dichtend Aufnahme. Hierzu ist an einem ersten zylindrischen Endteil 3.1a des Schieberkolbens 3, der insgesamt zweiteilig ausgeführt ist und in seinem äußeren und, bezogen auf die Darstellungslage, unteren Bereich aus einem ersten Schließgliedteil 3.1 und seinem inneren und, bezogen auf die Darstellungslage, oberen Bereich aus einem zweiten Schließgliedteil 3.2 besteht, eine erste Sitzdichtung 8 vorgesehen. Letztere ist in einer zum zweiten Schließglied 4 hin offenen Randausnehmung 3.1 b in dem am ersten Schließgliedteil 3.1 endseitig vorgesehenen ersten zylindrischen Endteil 3.1 a angeordnet. Die erste Sitzdichtung 8 wirkt mit einer umfangsseitigen Mantelfläche 8a radial auf die erste Sitzfläche 2a und mit einer gegenüber der umfangsseitigen Mantelfläche 8a im Wesentlichen senkrecht orientierten, dem zweiten Schließglied 4 zugewandten oberen stimseitigen Begrenzungsfläche 8b axial auf eine, bezogen auf die Darstellungslage, stirnseitige Begrenzungsfläche 4b des zweiten Schließgliedes 4.

Die Randausnehmung 3.1 b fixiert die erste Sitzdichtung 8, bezogen auf die Darstellungslage, zum einen unverrückbar nach unten. Um eine Verschiebung der ersten Sitzdichtung 8 nach oben zu verhindern, ist in dieser ein ringförmiger Einlegeteil 11 einvulkanisiert, der, im Querschnitt gesehen, ein hammerförmiges Kopfteil 11 a und einen sich an diesen anschließenden Steg 11 b aufweist. Letzterer erstreckt sich im Wesentlichen senkrecht zur Längsachse des ersten Schließgliedes 3 radial nach innen und ragt dort über eine innere mantelseitige Begrenzung der ersten Sitzdichtung 8 ein Stück weit hinaus. Dadurch erfährt der Steg 11b zwischen dem ersten zylindrischen Endteil 3.1a des ersten Schließgliedteils 3.1 und einem in letzterem innenseitig koaxial Aufnahme findenden zweiten zylindrischen Endteil 3.2a des zweiten Schließgliedteils 3.2 eine form- und kraftschlüssige Einspannung.

Eine weitere Maßnahme, um eine Verschiebung der ersten Sitzdichtung 8 nach oben zu unterbinden, besteht darin, oberhalb des Steges 11 b am zweiten zylindrischen Endteil 3.2a einen konischen Endabschnitt 3.2b vorzusehen, der sich, bezogen auf die Darstellungslage, nach oben hin radial erweitert und dadurch den benachbarten Teil der ersten Sitzdichtung 8 in Richtung des Steges 11 b und des im Zentrum der ersten Sitzdichtung 8 platzierten hammerförmigen Kopfteils 11 a verpresst. Die Randausnehmung 3.1 b und der konische Endabschnitt 3.2b bilden somit annähernd eine u-förmige Nut für die erste Sitzdichtung 8, wobei diese Nut, bezogen auf die Darstellungslage, eine zum Zentrum des Schließgliedes 3 und nach unten geneigte Erstreckungsrichtung aufweist.

Das Fügen und damit die form- und kraftschlüssige Einbettung der ersten Sitzdichtung 8 in Verbindung mit ihrem Einlegeteil 11 im ersten Schließglied 3 erfolgt dadurch, dass der erste und der zweite Schließgliedteil 3.1, 3.2 über eine im ersten zylindrischen Endteil 3.1a ausgebildete koaxiale Aufnahmebohrung 3.1 c, in die das zweite zylindrische Endteil 3.2a eingreift, zueinander koaxial zentriert und über sich jeweils an diese Führung anschließende Verschraubungsteile 3.1d, 3.2c miteinander verschraubt sind.

Das als Sitzteller ausgebildete zweite Schließglied 4 wirkt in der Schließstellung des Doppelsitzventils 1 mit einer zweiten Sitzfläche 2b zusammen, gegenüber der das zweite Schließglied 4 mittels einer im Wesentlichen axial wirkenden zweiten Sitzdichtung 9 abgedichtet ist. Die zweite Sitzfläche 2b ist dabei kegelförmig mit geringer Neigung zur Verbindungsöffnung 2c ausgeführt, damit Flüssigkeit selbsttätig dorthin abfließen kann.

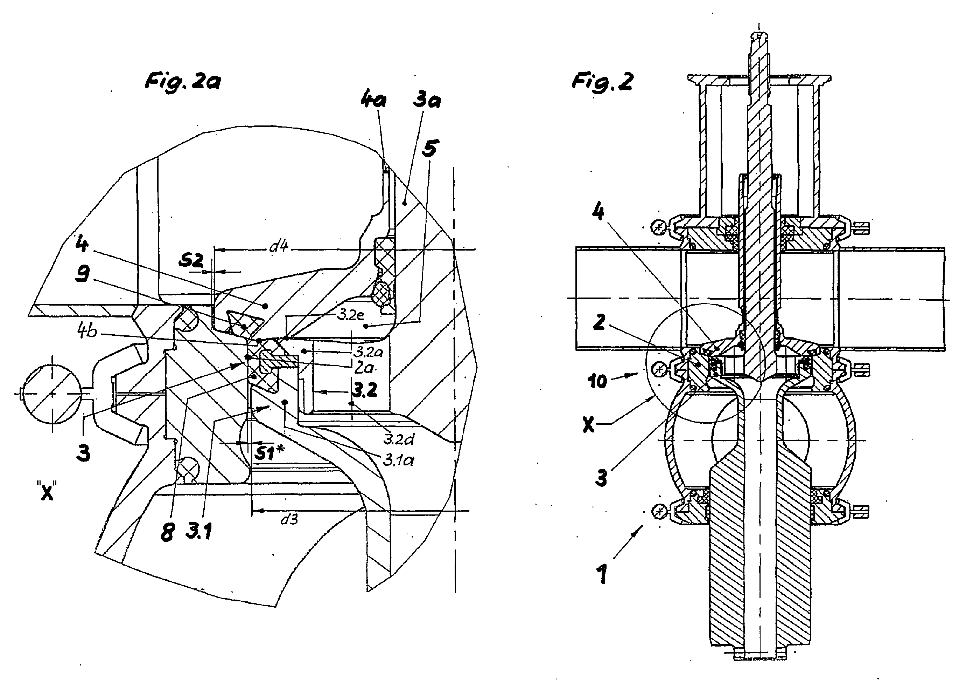

Die beiden Schließglieder 3 und 4 bilden sowohl in der dargestellten Schließ- als auch in der sog. Abholstellung (**Figuren 1,1a** und **Figuren 2, 2a**) und einer sich anschließenden Offenstellung (**Figuren 3** und **3a**) zwischen sich einen Leckagehohlraum 5 aus, der über eine in einem rohrförmigen Druckausgleichkolben 3.1e des Schieberkolbens 3 angeordnete Ablaufbohrung 3.1g mit der Umgebung des Doppelsitzventils 1 verbunden ist. Unterhalb des ersten Schließgliedes 3 ist der Druckausgleichkolben 3.1e in Form eines Verbindungsteils 3.1f im Durchmesser eingeschnürt, damit in der Offenstellung des Doppelsitzventils 1 im Durchdringungsbereich zwischen dem Druckausgleichkolben 3.1 e und dem ersten Ventilgehäuseteil 1a ein dem Nenndurchtrittsquerschnitt des Doppelsitzventils 1 annähernd entsprechender Durchtrittsquerschnitt auch an dieser Stelle vorliegt.

Der Leckagehohlraum 5 ist über mehrere, über den Umfang verteilt angeordnete Verbindungsbohrungen 3.2d im zweiten zylindrischen Endteil 3.2a mit der Ablaufbohrung 3.1g verbunden. Die obere stirnseitige Begrenzungsfläche 8b der ersten Sitzdichtung 8 geht stufenlos in eine obere Begrenzungsfläche 3.2e (**Figur 1a**) des zweiten zylindrischen Endteils 3.2a über, wobei letztere zur Ableitung von Restflüssigkeit eine geringe nach innen abfallende Neigung besitzt. Die mit der oberen stimseitigen Begrenzungsfläche 8b der ersten Sitzdichtung 8 und der sich anschließenden oberen Begrenzungsfläche 3.2e des zweiten zylindrischen Endteils 3.2a korrespondierende stirnseitige Begrenzungsfläche 4b des zweiten Schließgliedes 4 besitzt einen nahezu senkrecht zur Längsachse der Schließglieder 3, 4 ausgerichteten Verlauf, wobei in der Abholstellung (**Figur 2a**), wenn das erste Schließglied 3 am zweiten Schließglied 4 zur Anlage kommt, die obere und die untere Begrenzungsfläche 3.2e, 4b sich einander in unmittelbarer Nachbarschaft zur ersten Sitzdichtung 8 berühren. Die Mitnahme des zweiten Schließgliedes 4 durch das erste Schließglied 3 erfolgt demnach über die Begrenzungsflächen 3.2e und 4b. In dieser Abholstellung und der sich anschließenden Offenstellung ist ein hinreichender Dichtungskontakt zwischen der stirnseitigen Begrenzungsfläche 4b einerseits und der oberen stirnseitigen Begrenzungsfläche 8b der ersten Sitzdichtung 8 andererseits infolge elastischer Verformung der ersten Sitzdichtung 8 in diesem Bereich sichergestellt.

Ein zwischen der ersten Verstellstange 3a und der zweiten Verstellstange 4a gebildeter, nicht bezeichneter Ringspalt ist an seinem Austritt in den Leckagehohlraum 5 entweder über einen Verschluss 7 dicht verschlossen oder über eine Ringspaltdüse 7* durchlässig für Reinigungsflüssigkeit ausgebildet (**Figur 1a**), sodass Reinigungsflüssigkeit, die über den Ringspalt von außerhalb des Doppelsitzventils 1 zugeführt wird, über diese Ringspaltdüse 7* zum einen radial nach außen und zum andern mit einer tangentialen Komponente in den Leckagehohlraum 5 eingebracht wird, wobei die tangentiale Komponente eine wendel- oder spiralförmige Strömung im Leckagehohlraum 5 erzeugt.

Bezogen auf die Darstellungslage ist am unteren Ende der Verbindungsöffnung 2c in dem Sitzring 2 in Fortsetzung der ersten Sitzfläche 2a eine erste ringförmige Ausnehmung 2d vorgesehen (**Figur 3a**), die nach unten hin in einen ringförmigen, die Verbindungsöffnung 2c radial verengenden Vorsprung 2f übergeht. Die erste ringförmige Ausnehmung 2d ist in axialer Richtung so bemessen, dass in ihr in der ersten Teiloffenstellung T1 des ersten Schließgliedes 3 (**Figur 5a**) die erste Sitzdichtung 8 derart plaziert ist, dass zwischen der ersten Sitzdichtung 8 und dem benachbarten Sitzring 2 ein hinreichender Durchtrittsspalt für eine aus dem ersten Ventilgehäuseteil 1a herangeführte erste Sitzreinigungsströmung R1 zur Verfügung steht.

Bezogen auf die Darstellungslage schließt sich an die zweite Sitzfläche 2b radial außenseits eine im Wesentlichen parallel zur Längsachse der Schließglieder 3, 4 orientierte zweite ringförmige Ausnehmung 2e an (**Figur 3a**), in die die außenseitige Mantelfläche des zweiten Schließgliedes 4, welches dort einen zweiten Außendurchmesser d4 aufweist, teilweise eingreift und dort einen Umfangsring spalt mit einem zweiten radialen Spaltmaß S2 bildet (**Figur 2a**).

Wie **Figur 2a** weiter verdeutlicht, wird zwischen der ersten Sitzfläche 2a und dem innenseits benachbarten ersten zylindrischen Endteil 3.1 a, der einen ersten Außendurchmesser d3 besitzt, ein Umfangsringspalt mit einem dritten radialen Spaltmaß S1* gebildet. Ein weiterer Umfangsringspalt mit einem ersten radialen Spaltmaß S1 kommt zustande, wenn das erste Schließglied 3 in seine erste Teiloffenstellung T1 überführt wurde (**Figur 5a**), in der es diesen Umfangsringspalt zwischen dem ersten Außendurchmesser d3 des ersten zylindrischen Endteils 3.1 a und dem ringförmigen Vorsprung 2f, der einen ersten Innendurchmesser D3 besitzt, bildet.

Das erste und das zweite Ventilgehäuseteil 1a, 1b sind über ein Verbindungsmittel 12, im vorliegenden Falle über eine sog. Klemmringverbindung, miteinander verbunden (**Figuren 1, 1a**). In gleicher Weise ist ein nicht bezeichneter Deckel mit dem ersten Ventilgehäuseteil 1a verbunden, um dieses nach unten hin abzudichten. Eine entsprechende Verbindung existiert zwischen dem oberen Ventilgehäuseteil 1 a und dem Laternengehäuse 6.

Der volle Öffnungshub H des Doppelsitzventils 1 wird dadurch eingeleitet, dass das erste Schließglied 3 über die erste Verstellstange 3a in Richtung des zweiten Schließgliedes 4 verschoben wird, an diesem zur Anlage gelangt (**Figur 2a****;** dargestellte Abholstellung) und bei der weiteren Öffnungsbewegung das zweite Schließglied 4 gleichfalls in eine Offenstellung überführt (**Figuren 3** und **3a**). In der Abholstellung (**Figur 2a**) ergibt sich der vorstehend beschriebene Umfangsringspalt, der das dritte radiale Spaltmaß S1* besitzt. Letzteres kann, da diesem Umfangsringspalt keinerlei strömungstechnische Funktion zukommt, hinreichend groß dimensioniert werden, sodass mit Sicherheit mit keinem Berühren oder "Fressen" in diesem Bereich zu rechnen ist.

Man erkennt weiterhin aus **Figur 2a****,** dass die erste Sitzdichtung 8 derart an der stimseitigen Begrenzungsfläche 4b des zweiten Schließgliedes 4 und an der, radial gesehen, nach innen über die zylindrische Sitzfläche 2a hinaus reichenden zweiten Sitzdichtung 9 anliegt, dass in diesem Bereich nunmehr kein kavernenartig eingeschlossener Ringspaltbereich mehr vorliegt, wie dies bei Dichtungsanordnungen nach dem Stand der Technik regelmäßig der Fall ist. Dies erklärt sich dadurch, dass sich die erste Sitzdichtung 8 aufgrund ihrer durch die stirnseitige Begrenzungsfläche 4b bewirkten geringfügigen Deformation derart in den kritischen Eckenbereich zur zweiten Sitzdichtung 9 hin auswulstet, dass hier kein ringförmiger Spaltraum mehr entstehen kann. Dieser Tatbestand ist nun dafür verantwortlich, dass das Doppelsitzventil 1 gemäß der Erfindung leckagefrei schaltet. Dies wiederum bedeutet, dass im kritischen Bereich zwischen den beiden Sitzdichtungen 8, 9 keine Flüssigkeit eingeschlossen wird, somit dort auch kein Druckaufbau beim Schalten auftreten und zwangsläufig kein Verpressen von eingeschlossener Flüssigkeit in die engen Spalte zwischen den Sitzdichtungen 8, 9 und den zugeordneten Dichtungsnuten erfolgen kann.

Die **Figuren 3** und **3a** zeigen den vollen Öffnungshub H (volle Offenstellung) des Doppelsitzventils 1. In dieser Stellung kann eine Durchflussströmung Q entweder vom ersten Ventilgehäuseteil 1a zum zweiten Ventilgehäuseteil 1b oder umgekehrt auf dem Weg über die Verbindungsöffnung 2c gelangen. Der Leckagehohlraum 5 ist aufgrund der axialen Dichtfunktion der ersten Sitzdichtung 8 gegenüber dem zweiten Schließglied 4 zur Umgebung hin, in diesem Falle zum Innenraum des zweiten Ventilgehäuseteils 1 b, hermetisch abgedichtet, sodass keinerlei Fluid aus letzterem in den Leckagehohlraum 5 gelangen kann. Falls der Austritt des zwischen den Verstellstangen 3a, 4a gebildeten Ringspaltes mit der Ringspaltdüse 7* ausgestattet ist, lässt sich über diesen in Verbindung mit der Ringspaltdüse 7* von außerhalb des Doppelsitzventils 1 herangeführtes (externes) Reinigungsmittel in den Leckagehohlraum 5 ausbringen, das dann die Innenflächen des Leckagehohlraumes 5, der Verbindungsbohrungen 3.2d und der Ablaufbohrung 3.1g abreinigt.

Zum Zwecke der Sitzreinigung des zweiten Schließgliedes 4 (**Figuren 4** und **4a****)**, wird dieses um die zweite Teiloffenstellung T2 von der zugeordneten zweiten Sitzfläche 2b spaltweit entfernt. Dabei wird zwischen dem zweiten Außendurchmesser d4 des zweiten Schließgliedes 4 und der zweiten ringförmigen Ausnehmung 2e, die einen zweiten Innendurchmesser D4 aufweist, ein zweiter Drosselspalt D2 mit dem zweiten radialen Spaltmaß S2 gebildet, über den eine zweite Sitzreinigungsströmung R2 aus dem zweiten Ventilgehäuseteil 1b herangeführt werden kann. Diese zweite Sitzreinigungsströmung R2 wird mengenmäßig durch den zweiten Drosselspalt D2 begrenzt und gelangt über den Spalt an der freigelegten zweiten Sitzfläche 2b in den Leckagehohlraum 5, um von dort über die Verbindungsbohrungen 3.2d und die sich anschließende Ablaufbohrung 3.1g in die Umgebung des Doppelsitzventils 1 abgeführt zu werden.

Es wird deutlich, dass durch die erfindungsgemäße Anordnung des zweiten Drosselspaltes D2 keine direkte Anströmung der ersten Sitzdichtung 8 im ersten Schließglied 3 gegeben ist (**Figur 4a**) und dass weiterhin auf der Anströmseite der zweiten Sitzdichtung 9 kein Einklemmen von Partikeln zwischen dieser und der zugeordneten zweiten Sitzfläche 2b möglich ist, es sei denn, diese Partikel wären so klein, dass sie den zweiten Drosselspalt D2 mit seinem zweiten radialen Spaltmaß S2 passieren können. Es wird in der zweiten Teiloffenstellung T2 des Doppelsitzventils 1 weiterhin deutlich, dass der Innenraum des Leckagehohlraums 5, insbesondere im Bereich seiner unteren Begrenzung durch das erste Schließglied 3 in Verbindung mit der in diesem eingebetteten ersten Sitzdichtung 8, keinen Sumpf aufweist. Die sich dort ansammelnde Flüssigkeit kann über die Verbindungsbohrungen 3.2d rückstandsfrei abgeführt werden.

Zur Sitzreinigung des ersten Schließgliedes 3 (**Figuren 5** und **5a**) wird dieses in die erste Teiloffenstellung T1 um einen entsprechenden, dem vollen Öffnungshub H entgegen gesetzten Teilhub nach unten verschoben, sodass die erste Sitzdichtung 8 im Bereich der ersten ringförmigen Ausnehmung 2d positioniert ist. Das zweite Schließglied 4 bleibt in dieser Sitzreinigungsstellung in seiner Schließlage. Die Verschiebung des ersten Schließgliedes 3 hat zur Folge, dass zwischen dem ringförmigen Vorsprung 2f und dem ersten Außendurchmesser d3 des ersten zylindrischen Endteils 3.1 a ein erster Drosselspalt D1 mit dem ersten radialen Spaltmaß S1 gebildet wird. Über den ersten Drosselspalt D1 kann nunmehr die erste Sitzreinigungsströmung R1 aus dem ersten Ventilgehäuseteil 1a an die in der ersten ringförmigen Ausnehmung 2d umströmbare erste Sitzdichtung 8 herangeführt werden, sodass eine Reinigung dieses Bereichs und der sich anschließenden ersten Sitzfläche 2a gegeben ist. Die erste Sitzreinigungsströmung R1 gelangt dann über den Leckagehohlraum 5, die Verbindungsbohrungen 3.2d und die nachfolgende Ablaufbohrung 3.1g schließlich in die Umgebung des Doppelsitzventils 1.

Auch bei der Sitzreinigung des ersten Schließgliedes 3 wird wiederum deutlich, dass durch die erfindungsgemäße Anordnung des ersten Drosselspaltes D1, nämlich auf der Anströmseite der ersten Sitzdichtung 8, kein Einklemmen von Partikeln zwischen der ersten Sitzdichtung 8 und dem benachbarten Sitzring 2 möglich ist, solange diese Partikel nicht so klein sind, dass sie den ersten Drosselspalt D1 passieren können. Weiterhin ist ersichtlich, dass durch die Orientierung der ersten ringförmigen Ausnehmung 2d in Verbindung mit der benachbarten ersten Sitzdichtung 8 ein direktes Anströmen der im zweiten Schließglied 4 angeordneten zweiten Sitzdichtung 9 auszuschließen ist.

Da die erste ringförmige Ausnehmung 2d die erste Sitzfläche 2a von der den ringförmigen Vorsprung 2f begrenzenden Berandung trennt, können diese beiden voneinander getrennten Mantelflächen 2a, 2f des Sitzringes 2 unterschiedlich in ihrem jeweiligen Durchmesser dimensioniert werden. Dadurch kann im Bereich der ersten Sitzfläche 2a das dritte radiale Spaltmaß S1* (**Figur 2a**) größer ausgeführt werden als das den ersten Drosselspalt D1 dimensionierende erste radiale Spaltmaß S1 (**Figur 5a**). Dieser Tatbestand hat zur Folge, dass ein die erste Sitzdichtung 8 beeinträchtigendes Berühren und "Fressen" des ersten Schließgliedes 3 im Bereich der ersten Sitzfläche 2a mit Sicherheit vermieden werden kann. Ein Berühren und "Fressen" im ersten Drosselspalt D1, der mit seinem ersten radialen Spaltmaß S1 in der Regel kleiner toleriert wird als das dritte radiale Spaltmaß S1*, hat demnach keine nachteilige Auswirkung auf die erste Sitzfläche 2a und die mit ihr zusammenwirkende erste Sitzdichtung 8.

### BEZUGSZEICHENLISTE DER VERWENDETEN ABKÜRZUNGEN

- 1: Doppelsitzventil
- 10: Ventilgehäuse
- 1a: erstes Ventilgehäuseteil
- 1b: zweites Ventilgehäuseteil
- 2: Sitzring
- 2a: erste Sitzfläche (zylindrische Sitzfläche)
- 2b: zweite Sitzfläche
- 2c: Verbindungsöffnung
- 2d: erste ringförmige Ausnehmung
- 2e: zweite ringförmige Ausnehmung
- 2f: ringförmiger Vorsprung
- 3: erstes Schließglied (Schieberkolben)
- 3.1: erster Schließgliedteil
- 3.2: zweiter Schließgliedteil
- 3a: erste Verstellstange
- 3.1 a: erstes zylindrisches Endteil
- 3.1 b: Randausnehmung
- 3.1 c: Aufnahmebohrung
- 3.1 d: erstes Verschraubungsteil
- 3.1 e: Druckausgleichkolben
- 3.1f: Verbindungsteil
- 3.1g: Ablaufbohrung
- 3.2a: zweites zylindrisches Endteil
- 3.2b: konischer Endabschnitt
- 3.2c: zweites Verschraubungsteil
- 3.2d: Verbindungsbohrung
- 3.2e: obere Begrenzungsfläche
- 4: zweites Schließglied
- 4a: zweite Verstellstange
- 4b: stirnseitige Begrenzungsfläche
- 5: Leckagehohlraum
- 6: Latemengehäuse
- 7: Verschluss
- 7*: Ringspaltdüse
- 8: erste Sitzdichtung (radial und axial)
- 8a: umfangsseitige Mantelfläche
- 8b: obere stirnseitige Begrenzungsfläche
- 9: zweite Sitzdichtung (axial/radial)
- 11: Einlegeteil
- 11a: hammerförmiger Kopfteil
- 11 b: Steg
- 12: Verbindungsmittel

- d3: erster Außendurchmesser/erster zylindrischer Ansatz (vom ersten zylindrischen Endteil (3.1a))
- d4: zweiter Außendurchmesser/zweiter zylindrischer Ansatz (vom zweiten Schließglied (4))

- D1: erster Drosselspalt
- D2: zweiter Drosselspalt
- D3: erster Innendurchmesser/erster Abschnitt
- D4: zweiter Innendurchmesser/zweiter Abschnitt
- H: voller Öffnungshub (volle Offenstellung)
- Q: Durchflussströmung
- R1: erste Sitzreinigungsströmung
- R2: zweite Sitzreinigungsströmung
- S1: erstes radiales Spaltmaß (des ersten Drosselspaltes (D1))
- S1*: drittes radiales Spaltmaß (an der zylindrischen Sitzfläche)
- S2: zweites radiales Spaltmaß (des zweiten Drosselspaltes (D2))
- T1: erste Teiloffenstellung
- T2: zweite Teiloffenstellung

## Patentansprüche

1. Doppeisitzventil (1) mit zwei seriell angeordneten, relativ zueinander bewegbaren Schließgliedern (3, 4), die in der Schließstellung des Doppelsitzventils (1) das Überströmen von Fluiden von einem Ventilgehäuseteil (1a, 1b) in ein anderes verhindern, die sowohl in der Schließ- als auch in der Offenstellung einen Leckagehohlraum (5) zwischen sich begrenzen, der wenigstens einen Verbindungsweg mit der Umgebung des Doppelsitzventils aufweist, wobei in der Schließstellung des Doppelsitzventils (1) ein als Schieberkolben ausgebildetes erstes Schließglied (3) mit einem Endabschnitt, der mit einer ersten Sitzdichtung (8) ausgestattet ist, in einer die Ventilgehäuseteile (1 a, 1 b) miteinander verbindenden Verbindungsöffnung (2c) an einer ersten Sitzfläche (2a) dichtend Aufnahme findet und im Zuge seiner Öffnungsbewegung, in Richtung einem Gebrauch vertikalen Achse, am als Sitzteller mit einer zweiten Sitzdichtung (9) ausgebildeten zweiten Schließglied (4) dichtend zur Anlage kommt und letzteres bei der weiteren Öffnungsbewegung gleichfalls in die Offenstellung überführt wird, wobei die erste Sitzdichtung (8) radial gegenüber der als zylindrische Sitzfläche ausgebildeten ersten Sitzfläche (2a) und axial gegenüber dem zweiten Schließglied (4) abdichtet, wobei die erste Sitzdichtung (8) in einer zum zweiten Schließglied (4) hin offenen Randausnehmung (3.1b) im ersten Schließglied (3) angeordnet ist, wobei sich eine dem zweiten Schließglied (4) zugewandte obere stirnseitige Begrenzungsfläche (8b) der ersten Sitzdichtung (8) in einer oberen Begrenzungsfläche (3.2e) des ersten Schließgliedes (3) fortsetzt und die obere stirnseitige Begrenzungsfläche (8b) der ersten Sitzdichtung (8) im Wesentlichen senkrecht zur zylindrischen Sitzfläche (2a) orientiert ist, und wobei die zweite Sitzdichtung (9) beim Kontakt mit einer zugeordneten zweiten Sitzfläche (2b), in radialer Richtung gesehen, unmittelbar außenseits an die zylindrische Sitzfläche (2a) und, axial gesehen, unmittelbar an das Ende der zylindrischen Sitzfläche (2a) angrenzt und derart bemessen ist, dass ihre der zweiten Sitzfläche (2b) zugewandte Berandung, radial gesehen, nach innen über die zylindrische Sitzfläche (2a) hinausreicht,
**dadurch gekennzeichnet,**
• **dass** die sich in der oberen Begrenzungsfläche (3.2e) des ersten Schließgliedes (3) fortsetzende obere stirnseitige Begrenzungsfläche (8b) der ersten Sitzdichtung (8) gegenüber dem zweiten Schließglied (4) den kürzeren axialen Abstand aufweist, als die obere Begrenzungsfläche (3.2e) des ersten Schließgliedes (3),
• und **dass** eine von der zylindrischen Sitzfläche (2a) umfasste, dem ersten Schließglied (3) zugewandte stirnseitige Begrenzungsfläche (4b) des zweiten Schließgliedes (4) im Bereich der radialen Erstreckung der oberen stirnseitigen Begrenzungsfläche (8b) der ersten Sitzdichtung (8) eine sehr geringe, zur Mittelachse des zweiten Schließgliedes (4) hin gerichtete, aufsteigende Neigung besitzt.

2. Doppelsitzventil nach Anspruch 1,
**dadurch gekennzeichnet,**
**dass** die erste Sitzdichtung (8) in der Randausnehmung (3.1b) form- und kraftschlüssig eingebettet ist.

3. Doppelsitzventil nach Anspruch 1 oder 2,
**dadurch gekennzeichnet,**
**dass** in der ersten Sitzdichtung (8) ein Einlegeteil (11) eingebettet ist.

4. Doppelsitzventil nach Anspruch 3,
**dadurch gekennzeichnet,**
**dass** der Einlegeteil (11), in radialer Richtung gesehen, aus der ersten Sitzdichtung (8) innenseits in Form eines Steges (11 b) heraustritt.

5. Doppelsitzventil nach Anspruch 3 oder 4,
**dadurch gekennzeichnet,**
**dass** der Einlegeteil (111) in einem sich axial erstreckenden Teil als hammerförmiges Kopfteil (11a) ausgebildet ist.

6. Doppelsitzventil nach Anspruch 4 oder 5,
**dadurch gekennzeichnet,**
**dass** das erste Schließglied (3) zweistückig in Form eines hauptsächlich radial außenseitigen ersten Schließgliedteils (3.1) und eines hauptsächlich radial innenseitigen zweiten Schließgliedteils (3.2) ausgebildet ist, dass der Steg (11b) zwischen den Schließgliedteilen (3.1, 3.2) in axialer Richtung eingespannt ist, und dass das erste Schließgliedteil (3.1) die Randausnehmung (3.1b) auf der einen Seite und das zweite Schließgliedteil (3.2) die Randausnehmung (3.1b) auf der anderen Seite des Steges (11 b) ausbilden.

7. Doppelsitzventil nach Anspruch 6,
**dadurch gekennzeichnet,**
**dass** der Steg (11b) durch das zweite Schließgliedteil (3.2) eine, radial gesehen, innenseitige Stützung erfährt.

8. Doppelsitzventil nach Anspruch 6 oder 7,
**dadurch gekennzeichnet,**
**dass** die Schließgliedteile (3.1,3.2) über eine zylindrische Passung (3.1 c, 3.2a) in Richtung der Längsachse des ersten Schließgliedes (3) zueinander koaxial geführt und über eine sich an diese Führung anschließende Verschraubung (3.1d, 3.2c) miteinander verschraubt sind.

9. Doppelsitzventil nach einem der Ansprüche 1 bis 8,
**dadurch gekennzeichnet,**
**dass** die Randausnehmung (3.1 b) in dem dem zweiten Schließglied (4) abgewandten Bereich im Wesentlichen v-fömig ausgebildet ist, und zwar derart, dass sich, radial gesehen, die mit diesem Bereich korrespondierende erste Sitzdichtung (8) von innen nach außen entsprechend verjüngt

10. Doppelsitzventil nach einem der Ansprüche 6 bis 9,
**dadurch gekennzeichnet,**
**dass** der dem zweiten Schließglied (4) zugewandte zweite Schließgliedteil (3.2) einen konischen Endabschnitt (3.2b) aufweist, der die benachbarte erste Sitzdichtung (8) derart verpresst, dass diese sich, radial gesehen, in diesem Bereich von außen nach innen entsprechend verjüngt.

11. Doppelsitzventil nach einem der Ansprüche 1 bis 10,
**dadurch gekennzeichnet,**
**dass** die beiden Schließglieder (3, 4) unabhängig voneinander durch einen Teilhub (T1, T2) jeweils spaltweit in eine Sitzreinigungsstellung zwecks Spülung ihrer Sitzflächen (2a, 2b) überführbar sind,
und **dass** die Schließglieder (3,4) jeweils einen an diesen angeordneten zylindrischen Ansatz (d3, d4) aufweisen, der mit einem jeweils zugeordneten Abschnitt (D3, D4) der Verbindungsöffnung (2c) jeweils einen Drosselspalt (D1, D2) bildet, und dass letzterer jeweils auf der aus der Sitzreinigungsströmung (R1, R2) resultierenden Anströmseite der Sitzdichtung (8, 9) angeordnet ist.

12. Doppelsitzventil nach Anspruch 11,
**dadurch gekennzeichnet,**
**dass** zwischen der zylindrischen Sitzfläche (2a) des ersten Schließgliedes (3) und der den Drosselspalt (D1) gehäuseseitig begrenzenden Fläche mit einem ersten Innendurchmesser (D3) eine erste ringförmige Ausnehmung (2d) vorgesehen ist.

## Claims

1. Double-seat valve (1) comprising two closing members (3, 4) arranged in series and mobile relative to one another, which in the closed position of the double-seat valve (1) prevent the overflow of liquids from one valve housing part (1a, 1b) into another, which in both the closed position and the open position define a leakage cavity (5) therebetween, which comprises at least one connection path with the surroundings of the double-seat valve, in the closed position of the double-seat valve (1) a first closing member (3) configured as a sliding piston comprising an end portion which is provided with a first seat seal (8), being sealingly accommodated in a connection opening (2c), connecting the valve housing parts (1a, 1b) to one another, on a first seat surface (2a) and during its opening movement, in the direction of an axis which is vertical during use, coming to bear sealingly against the second closing member (4) configured as a seat disc with a second seat seal (9), and said second closing member during the further opening movement being also transferred into the open position, the first seat seal (8) being sealed radially relative to the first seat surface (2a) configured as a cylindrical seat surface and axially relative to the second closing member (4), the first seat seal (8) being arranged in an edge recess (3.1b), which is open towards the second closing member (4), in the first closing member (3), an upper defining surface (8b), on the front face, of the first seat seal (8) facing the second closing member (4) extending in an upper defining surface (3.2e) of the first closing member (3) and the upper defining surface (8b), on the front face, of the first seat seal (8) being oriented substantially perpendicular to the cylindrical seat surface (2a) and the second seat seal (9), when in contact with a corresponding second seat surface (2b), viewed in the radial direction, being immediately adjacent to the outside of the cylindrical seat surface (2a) and, viewed axially, being immediately adjacent to the end of the cylindrical seat surface (2a) and dimensioned such that its edge facing the second seat surface (2b), viewed radially, extends inwards beyond the cylindrical seat surface (2a),
**characterised in that**
• the upper defining surface (8b), on the front face, of the first seat seal (8) extending in the upper defining surface (3.2e) of the first closing member (3) relative to the second closing member (4) has a smaller axial distance than the upper defining surface (3.2e) of the first closing member (3),
• and **in that** a defining surface (4b), on the front face, of the second closing member (4) encompassed by the cylindrical seat surface (2a) facing the first closing member (3) in the region of the radial extension of the upper defining surface (8b), on the front face, of the first seat seal (8) has a very slight ascending incline oriented towards the centre axis of the second closing member (4).

2. Double-seat valve according to Claim 1,
**characterised in that**
the first seat seal (8) is embedded in the edge recess (3.1b) in a positive and non-positive manner.

3. Double-seat valve according to Claim 1 or 2,
**characterised in that**
an insert (11) is embedded in the first seat seal (8).

4. Double-seat valve according to Claim 3,
**characterised in that**
the insert (11), viewed in the radial direction, protrudes from the first seat seal (8) on the inside in the form of a projection (11b).

5. Double-seat valve according to Claim 3 or 4,
**characterised in that**
the insert (11) is configured in a part extending axially as a hammer-shaped top part (11a).

6. Double-seat valve according to Claim 4 or 5,
**characterised in that**
the first closing member (3) is configured in two parts in the form of an essentially radial external first closing member part (3.1) and an essentially radial internal second closing member part (3.2), **in that** the projection (11b) is gripped between the closing member parts (3.1, 3.2) in the axial direction and **in that** the first closing member part (3.1) forms the edge recess (3.1b) on one side of the projection (11b) and the second closing member part (3.2) forms the edge recess (3.1b) on the other side thereof.

7. Double-seat valve according to Claim 6,
**characterised in that**
the projection (11b) is supported on the inside by means of the second closing member part (3.2), viewed radially.

8. Double-seat valve according to Claim 6 or 7,
**characterised in that**
the closing member parts (3.1, 3.2) are guided relative to one another coaxially and are screwed together via a screw connection (3.1d, 3.2c) following this guidance, via a cylindrical fit (3.1 c, 3.2a) in the direction of the longitudinal axis of the first closing member (3).

9. Double-seat valve according to one of Claims 1 to 8,
**characterised in that**
the edge recess (3.1b) is of substantially V-shaped configuration in the region remote from the second closing member (4), and namely such that, viewed radially, the first seat seal (8) corresponding to this region accordingly tapers from the inside to the outside.

10. Double-seat valve according to one of Claims 6 to 9,
**characterised in that**
the second closing member part (3.2) facing the second closing member (4) has a conical end portion (3.2b) which presses the adjacent first seat seal (8) such that said seat seal, viewed radially, correspondingly tapers in this region from the outside to the inside.

11. Double-seat valve according to one of Claims 1 to 10,
**characterised in that**
the two closing members (3, 4) may be transferred independently of one another by a partial lift movement (T1, T2) respectively across the width of the gap into a seat cleaning position for the purpose of flushing their seat surfaces (2a, 2b),
and **in that** the closing members (3, 4) respectively comprise a cylindrical shoulder (d3, d4) arranged thereon, which forms with a respectively associated portion (D3, D4) of the connection opening (2c) one respective throttle gap (D1, D2) and **in that** said throttle gap is respectively arranged on the inflow side of the seat seal (8, 9) resulting from the seat cleaning flow (R1, R2).

12. Double-seat valve according to Claim 11,
**characterised in that**
a first annular recess (2d) is provided between the cylindrical seat surface (2a) of the first closing member (3) and the surface defining the throttle gap (D1) on the housing side, having a first internal diameter (D3).

## Revendications

1. Soupape à double siège (1) comprenant deux éléments de fermeture (3, 4) mobiles l'un par rapport à l'autre et disposés en série, qui évitent dans la position de fermeture de la soupape à double siège (1) le débordement de fluides d'une partie de cage de soupape (1a, 1b) à une autre, qui délimitent non seulement dans la position de fermeture, mais aussi dans la position d'ouverture, une cavité de fuite (5) entre eux, cette cavité présentant au moins une voie de communication avec l'environnement de la soupape à double siège, dans la position de fermeture de la soupape à double siège (1) un premier élément de fermeture (3), configuré comme un piston coulissant, avec un segment d'extrémité qui est équipé d'un premier joint de siège (8) logé de façon étanche contre une première surface d'appui (2a) dans un orifice de communication (2c) reliant les parties de cage de soupape (1a, 1b) entre elles, et au cours de son mouvement d'ouverture, en direction d'un axe vertical en cours d'utilisation, vient en appui étanche contre le second élément de fermeture (4) configuré comme plateau d'appui avec un second joint de siège (9), et le second élément de fermeture est également transféré lors du mouvement d'ouverture ultérieur dans la position d'ouverture, moyennant quoi le premier joint de siège (8) devient étanche radialement par rapport à la première surface d'appui (2a) conçue comme surface d'appui cylindrique, et axialement par rapport au second élément de fermeture (4), moyennant quoi le premier joint de siège (8) est disposé dans un évidement marginal (3.1b) ouvert vers le second élément de fermeture (4) dans le premier élément de fermeture (3), moyennant quoi une surface de délimitation (8b) frontale supérieure dirigée vers le second élément de fermeture (4) du premier joint de siège (8) se poursuit dans une surface de délimitation supérieure (3.2e) du premier élément de fermeture (3), et la surface de délimitation frontale supérieure (8b) du premier joint de siège (8) est orientée essentiellement perpendiculairement à la surface d'appui cylindrique (2a), et moyennant quoi le second joint de siège (9) est adjacent lors du contact avec une seconde surface d'appui (2b) associée, vu dans la direction radiale, directement côté extérieur à la surface d'appui cylindrique (2a), et, vu axialement, directement à l'extrémité de la surface d'appui cylindrique (2a), et est dimensionné de telle sorte que son bord dirigé vers la seconde surface d'appui (2b), vu radialement, s'étend vers l'intérieur au-dessus de la surface d'appui cylindrique (2a),
**caractérisée en ce que**
• la surface de délimitation (8b) frontale supérieure du premier joint de siège (8), se poursuivant dans la surface de délimitation supérieure (3.2e) du premier élément de fermeture (3), présente une distance axiale plus courte par rapport au second élément de fermeture (4) que la surface de délimitation supérieure (3.2e) du premier élément de fermeture (3),
• et une surface de délimitation (4b) frontale du second élément de fermeture (4), dirigée vers le premier élément de fermeture (3) entourée par la surface d'appui cylindrique (2a) dans la zone de l'étendue radiale de la surface de délimitation frontale supérieure (8b) du premier joint de siège (8), possède une inclinaison ascendante très faible orientée vers l'axe central du second élément de fermeture (4).

2. Soupape à double siège selon la revendication 1,
**caractérisée en ce que**
le premier joint de siège (8) est encastré dans l'évidement marginal (3.1b) par complémentarité de forme et de force.

3. Soupape à double siège selon les revendications 1 ou 2,
**caractérisée en ce**
**qu'**une pièce d'insertion (11) est encastrée dans le premier joint de siège (8).

4. Soupape à double siège selon la revendication 3,
**caractérisée en ce que**
la pièce d'insertion (11), vu dans la direction radiale, ressort du premier joint de siège (8) vers l'intérieur sous la forme d'une nervure (11b).

5. Soupape à double siège selon les revendications 3 ou 4,
**caractérisée en ce que**
la pièce d'insertion (11) est configurée dans une partie s'étendant axialement comme une pièce de tête en forme de marteau (11a).

6. Soupape à double siège selon les revendications 4 ou 5,
**caractérisée en ce que**
le premier élément de fermeture (3) est conçu en deux parties sous la forme d'une première partie d'élément de fermeture (3.1) principalement radiale sur le côté externe et d'une seconde partie d'élément de fermeture (3.2) principalement radiale sur le côté interne, la nervure (11b) entre les parties d'élément de fermeture (3.1, 3.2) est fixée dans la direction axiale, et la première partie d'élément de fermeture (3.1) forme l'évidement marginal (3.1b) d'un côté, et la seconde partie d'élément de fermeture (3.2) forme l'évidement marginal (3.1b) de l'autre côté de la nervure (11b).

7. Soupape à double siège selon la revendication 6,
**caractérisée en ce que**
la nervure (11b) reçoit à travers la seconde partie d'élément de fermeture (3.2), vu radialement, un appui sur le côté interne.

8. Soupape à double siège selon les revendications 6 ou 7,
**caractérisée en ce que**
les parties d'élément de fermeture (3.1, 3.2) sont dirigées coaxialement les unes aux autres via un ajustement cylindrique (3.1c, 3.2a) en direction de l'axe longitudinal du premier élément de fermeture (3), et sont vissées les unes aux autres par un vissage (3.1 d, 3.2c) rattaché à ce guidage.

9. Soupape à double siège selon une des revendications 1 à 8,
**caractérisée en ce que**
l'évidement marginal (3.1b) est configuré essentiellement en forme de V dans la zone détournée du second élément de fermeture (4), et en effet de telle sorte que le joint de siège (8) correspondant à cette zone, vu radialement, se rétrécit en conséquence de l'intérieur vers l'extérieur.

10. Soupape à double siège selon une des revendications 6 à 9,
**caractérisée en ce que**
la seconde partie d'élément de fermeture (3.2) dirigée vers le second élément de fermeture (4) présente un segment d'extrémité conique (3.2b) qui comprime le premier joint de siège (8) adjacent, de telle sorte que celui-ci se rétrécit en conséquence de l'extérieur vers l'intérieur dans cette zone, vu radialement.

11. Soupape à double siège selon une des revendications 1 à 10,
**caractérisée en ce que**
les deux éléments de fermeture (3,4) peuvent être déplacés indépendamment l'un de l'autre, par une course partielle (T1, T2) respectivement d'une largeur de fente, dans une position de nettoyage de siège à des fins de rinçage de leurs surfaces d'appui (2a, 2b),
et **en ce que** les éléments de fermeture (3, 4) présentent respectivement un rebord (d3, d4) cylindrique disposé contre ceux-ci qui forme avec un segment (D3, D4) associé respectivement de l'orifice de communication (2c) une fente d'étranglement (D1, D2), et **en ce que** cette dernière est disposée respectivement sur le côté d'arrivée de fluide du joint de siège (8, 9) résultant de l'écoulement de nettoyage du siège (R1, R2).

12. Soupape à double siège selon la revendication 11,
**caractérisée en ce**
**qu'**un premier évidement (2d) annulaire est prévu entre la surface d'appui cylindrique (2a) du premier élément de fermeture (3) et la surface délimitant côté cage la fente d'étranglement (D1) avec un premier diamètre interne (D3).
